(19) 

Europäisches
Patentamt
European
Patent Office
Office européen
des brevets

(11) **EP 4 722 272 A1**

(12) **EUROPEAN PATENT APPLICATION**
published in accordance with Art. 153(4) EPC

(43) Date of publication:
08.04.2026  Bulletin 2026/15

(21) Application number: 24815631.7

(22) Date of filing: 31.05.2024

(51) International Patent Classification (IPC):
*C08G 65/10* (2006.01)    *B01J 31/28* (2006.01)
*B01J 37/04* (2006.01)

(52) Cooperative Patent Classification (CPC):
**B01J 31/28; B01J 37/04; C07C 31/12; C07F 19/00; C08G 65/08; C08G 65/10**

(86) International application number:
**PCT/JP2024/020110**

(87) International publication number:
**WO 2024/248152 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  01.06.2023  JP 2023090792

(71) Applicant: AGC INC.
Chiyoda-ku,
Tokyo 1008405 (JP)

(72) Inventors:
- **TAKEDA, Hajime**
  **Tokyo 100-8405 (JP)**
- **ARAI, Takeaki**
  **Tokyo 100-8405 (JP)**

(74) Representative: **Müller-Boré & Partner**
**Patentanwälte PartG mbB**
**Friedenheimer Brücke 21**
**80639 München (DE)**

(54) **COMPOSITE METAL CYANIDE COMPLEX CATALYST AND METHOD FOR PRODUCING SAME, COMPOSITE METAL CYANIDE COMPLEX SLURRY CATALYST AND METHOD FOR PRODUCING SAME, AND POLYMER PRODUCTION METHOD**

(57)    The present invention pertains to a double metal cyanide complex catalyst having a moisture content of 8,000 to 140,000 ppm as determined by the Karl Fischer method, and having diffraction peaks at $2\theta = 36°$ and $2\theta = 47°$, but no diffraction peak at $2\theta = 34°$, in an X-ray diffraction pattern.

EP 4 722 272 A1

**Description**

BACKGROUND OF THE INVENTION

Field of the Invention

The present invention relates to a composite metal cyanide complex catalyst (double metal cyanide complex catalyst), a method for producing a double metal cyanide complex catalyst, a double metal cyanide complex slurry catalyst, a method for producing a double metal cyanide complex slurry catalyst, and a method for producing a polymer using a double metal cyanide complex catalyst.

Priority is claimed on Japanese Patent Application No. 2023-090792, filed June 1, 2023, the content of which is incorporated herein by reference.

Description of Related Art

Double metal cyanide complex catalysts (hereinafter also referred to as DMC catalysts) are known as epoxide polymerization catalysts. Double metal cyanide complex catalysts have the advantage of being more active than base catalysts such as KOH and less likely to produce by-products with unsaturated bonds.

Conventionally, various studies have been conducted on DMC catalysts.

Patent Document 1 describes a method for increasing the polymerization rate of epoxides without increasing the amount of catalyst used by applying strong shear forces during production to produce a substantially amorphous DMC catalyst.

Patent Document 2 describes an Example in which a DMC catalyst obtained by producing a double metal cyanide in the presence of an organic complexing agent (for example, t-butyl alcohol) and a polyol with a number average molecular weight of less than 500 exhibits high activity in epoxide polymerization and produces a polyether polyol with an extremely low degree of unsaturation. On the other hand, it was shown that a Comparative Example in which an organic complexing agent was not used was inactive, and a Comparative Example in which the above polyol was not used exhibited low activity. Further, it was described that regarding the differences in crystal structure, signals were exhibited in the above Example in the X-ray diffraction pattern that were not observed in the above two Comparative Examples.

Patent Document 3 proposes a method for producing a DMC catalyst using a substantially water-free organic solvent, as moisture is considered a catalyst poison that inhibits catalytic activity in DMC catalysts.

PRIOR ART DOCUMENTS

[Patent Documents]

[Patent Document 1] Japanese Unexamined Patent Application, First Publication No. Hei 7-196778
[Patent Document 2] International Patent Publication No. 1997/040086
[Patent Document 3] Japanese Unexamined Patent Application, First Publication No. 2003-103177

SUMMARY OF THE INVENTION

Problems to be Solved by the Invention

In the polymerization reaction of epoxides, the molecular weight distribution (Mw/Mn) of the polymer tends to be small when a DMC catalyst is used, while ultra-high molecular weight components tend to be produced as impurities.

According to the findings of the inventors of the present invention and others, a large amount of ultra-high molecular weight components tends to be produced when the catalytic activity is high.

The present invention has an object of providing a double metal cyanide complex catalyst that exhibits excellent catalytic activity and is capable of suppressing the production of high molecular weight impurities.

Means for Solving the Problem

The inventors of the present invention and others conducted extensive research in order to solve the above-mentioned problems and discovered that by controlling the moisture content and crystal structure of a DMC catalyst, a DMC catalyst that has a long catalyst life (high catalytic activity) and is capable of suppressing the production of high molecular weight impurities can be obtained, resulting in the present invention.

The present invention includes the following aspects.

[1] A double metal cyanide complex catalyst having a moisture content of 8,000 to 140,000 ppm according to the Karl Fischer method of JIS K0068:2001, and having diffraction peaks at $2\theta = 36°$ and $2\theta = 47°$, but no diffraction peak at $2\theta = 34°$ in an X-ray diffraction pattern.

[2] A method for producing a double metal cyanide complex catalyst, the method including coordinating an organic ligand to a reaction product obtained by reacting a metal halide salt with a transition metal cyanide compound, wherein, after coordinating the aforementioned organic ligand, a moisture content of the aforementioned double metal cyanide complex catalyst is adjusted so that a moisture content of the aforementioned double metal cyanide complex catalyst as measured by the Karl Fischer method in accordance with JIS K0068:2001 is from 8,000 to 140,000 ppm, and diffraction peaks are present at $2\theta = 36°$ and $2\theta = 47°$, but a diffraction peak is absent at $2\theta = 34°$ in an X-ray diffraction pattern of the aforementioned double metal cyanide complex catalyst.

[3] The method for producing a double metal cyanide complex catalyst according to [2], wherein the aforementioned metal halide salt includes one or more selected from zinc chloride and zinc bromide.

[4] The method for producing a double metal cyanide complex catalyst according to [2] or [3], wherein the aforementioned organic ligand includes tert-butyl alcohol.

[5] A double metal cyanide complex slurry catalyst including the double metal cyanide complex catalyst described in [1] above, and a dispersion medium having a moisture content of 500 ppm or less as measured by the Karl Fischer method of JIS K0068:2001.

[6] The double metal cyanide complex slurry catalyst according to [5], in which a content of the aforementioned double metal cyanide complex catalyst is from 0.001 to 60% by mass with respect to a total mass of the aforementioned double metal cyanide complex slurry catalyst.

[7] A method for producing a double metal cyanide complex slurry catalyst, the method including: a slurry preparation step of preparing a slurry containing a double metal cyanide complex catalyst and a dispersion medium; and a moisture adjustment step of adjusting a moisture content of the aforementioned slurry so that a moisture content of the aforementioned double metal cyanide complex catalyst as measured by the Karl Fischer method in accordance with JIS K0068:2001 is from 8,000 to 140,000 ppm, and a moisture content of the aforementioned dispersion medium as measured by the Karl Fischer method in accordance with JIS K0068:2001 is 500 ppm or less, and diffraction peaks are present at $2\theta = 36°$ and $2\theta = 47°$, but diffraction peaks are absent at $2\theta = 34°$ in an X-ray diffraction pattern of the aforementioned double metal cyanide complex catalyst.

[8] The method for producing a double metal cyanide complex slurry catalyst according to [7], wherein the aforementioned slurry preparation step further includes a step in which an organic ligand is coordinated in the presence of water to a reaction product obtained by reacting a metal halide salt with a transition metal cyanide compound in the presence of water to obtain a liquid mixture containing a double metal cyanide complex catalyst and water, and impurities and water are removed from the aforementioned liquid mixture and a dispersion medium is added thereto to prepare a slurry containing the double metal cyanide complex catalyst and the dispersion medium.

[9] A method for producing a polymer, including polymerizing an epoxide in the presence of the double metal cyanide complex catalyst according to [1] above.

Effects of the Invention

According to the present invention, a double metal cyanide complex catalyst is obtained that exhibits excellent catalytic activity and is capable of suppressing the production of high molecular weight impurities.

DETAILED DESCRIPTION OF THE INVENTION

In the present specification and claims, a numerical range represented by a symbol "-" means a numerical range in which numerical values before and after this symbol "-" are the lower limit and upper limit values.

In the present specification and claims, the unit of content "ppm" is based on mass unless otherwise specified.

In the present specification, the moisture content of a double metal cyanide complex catalyst is a moisture content measured based on Section 6.4 Coulometric Titration Method in Karl Fischer Titration Method in Test methods for water content, as described in JIS K0068:2001 using a Karl Fischer moisture measuring device (for example, CA-07 or CA-200 (product name) manufactured by Mitsubishi Analytic Co., Ltd.). This moisture content is the total content (unit: ppm) of water of crystallization (bound water, coordinated water) contained in the crystals of the double metal cyanide complex catalyst and water not contained therein (free water) with respect to the mass of the solid double metal cyanide complex catalyst.

In the case of a double metal cyanide complex slurry catalyst (hereinafter also referred to as a "slurry catalyst") containing a double metal cyanide complex catalyst and a dispersion medium, a value measured based on Section 6.4 Coulometric Titration Method in Karl Fischer Titration Method in Test methods for water content, as described in JIS K0068:2001 using a Karl Fischer moisture measuring device (for example, CA-07 or CA-200 (product name) manufactured by Mitsubishi Analytic Co., Ltd.) using the slurry catalyst as a measuring object is taken as the moisture content in the slurry catalyst (hereinafter also referred to as "slurry moisture content").

The slurry moisture content is the total amount of the moisture contained in the double metal cyanide complex catalyst and the moisture contained in the dispersion medium.

A value obtained by subtracting the moisture in the dispersion medium from the slurry moisture content and converting the remaining water content to a water content with respect to the solid in the slurry is taken as the moisture content of the double metal cyanide complex catalyst.

The solid content in the slurry can be determined using the following heat drying method. That is, the dispersion medium is removed by subjecting the slurry catalyst to several times of operation of washing using a solvent (for example, hexane) that does not coordinate with a double metal cyanide complex and centrifuging. Subsequently, the recovered double metal cyanide complex is dried by heating at 100°C for 12 hours, and the mass of the obtained dried product is used as the mass of solids in the slurry catalyst to determine the solid content.

It should be noted that the solid content in the slurry catalyst may also be determined during the process of producing the slurry catalyst. More specifically, in a method in which a reaction product containing the synthesized double metal cyanide complex and a by-product salt is washed, a predetermined amount of dispersion medium is added to a filter cake obtained by solid-liquid separation, and volatile components such as water are removed to produce the desired slurry catalyst, a predetermined amount of the above filter cake is removed for measurement, the mass after drying at 100°C for 12 hours is used as the mass of solid, and the solid content in the slurry catalyst can be determined from the amount of dispersion medium added to the above filter cake and the mass of the above solid.

An X-ray diffraction pattern in the present specification is a one-dimensional pattern obtained using CuKα radiation (wavelength: 1.5418 Å) as X-rays, with the horizontal axis representing the diffraction angle ($2\theta$, units: °) and the vertical axis representing the intensity (arbitrary unit). In an X-ray diffraction pattern, a waveform that increases monotonically from a local minimum value reaching a local maximum value and then decreases monotonically down to a local minimum value is defined as a diffraction peak. The height from a straight line connecting the above two local minimum values to the above local maximum value is defined as the peak intensity.

In the present specification, the expression "having a diffraction peak at $2\theta = x°$" means that a local maximum value of the diffraction peak exists within a $2\theta$ range of $(x - 0.5)°$ or more and less than $(x + 0.5)°$, and that the peak intensity thereof is 1% or more with respect to a peak intensity (base peak intensity) of the diffraction peak at $2\theta = 24°$.

It should be noted that the above expression "diffraction peak at $2\theta = 24°$" refers to a diffraction peak with a local maximum value within a $2\theta$ range of $(24 - 0.5)°$ or more but less than $(24 + 0.5)°$.

In the present specification, the expression "having no diffraction peak at $2\theta = x°$" means that either a local maximum value does not exist within a $2\theta$ range of $(x - 0.5)°$ or more and less than $(x + 0.5)°$, or even if a local maximum value exists, the peak intensity thereof is less than 1% with respect to the above base peak intensity.

In the present specification, X-ray diffraction pattern measurement is performed under the following conditions. A measurement sample is a solid. In the case of a slurry catalyst, a dried product obtained by the above heat drying method is used as a measurement sample.

> X-ray: CuKα radiation ($\lambda$ = 1.54180 Å)
> Tube voltage: 45 kV
> Tube current: 200 mA
> Light source: monochromatic light source
> Measurement angle range: $2\theta$ = 10 to 80°
> Step width: ($\Delta 2\theta$) = 0.010° step scan
> Scan speed: 20°/min

Each peak can be analyzed by analyzing the obtained X-ray diffraction pattern using analysis software (for example, analysis software included with the instrument, such as SmartLab Studio II).

<Double metal cyanide complex catalyst>

A double metal cyanide complex catalyst of the present embodiment (hereinafter also referred to as a DMC catalyst (A)) is a crystalline solid and contains a reaction product of a metal halide salt and a transition metal cyanide compound, an organic ligand, and water of crystallization (such as coordinated water) encapsulated within the crystal. In addition, trace amounts of impurities contained in the above metal salt, metal compound, and the like that are unavoidable during production, and moisture other than the water of crystallization may be contained.

The metal halide salts, transition metal cyanide compounds, and organic ligands that are known in the art for producing a DMC catalyst can be used above.

The DMC catalyst (A) is considered to be represented by the following Formula (1).

$$M^1_a[M^2(CN)_b]_c \cdot d(M^1_e X_f) \cdot g(Ligand) \cdot h(H_2O) \qquad (1)$$

In the Formula (1), $M^1_e X_f$ is a metal halide salt, $M^1$ is a metal atom that serves as a cation, X is a halogen atom that serves as a counter anion, $M^2$ is a transition metal contained in a transition metal cyanide compound and is a metal atom that serves as an active site, and Ligand is an organic ligand. a, b, c, d, e, f, g, and h are integers, and a, b, c, e, and f are numbers to achieve electrical neutrality.

Examples of the above $M^1$ include Zn(II), Fe(II), Fe(III), Co(II), Ni(II), Al(III), Sr(II), Mn(II), Cr(III), Cu(II), Sn(II), Pb(II), Mo(IV), Mo(VI), W(IV), and W(VI).

Examples of the above $M^2$ include Co(III), Fe(II), Fe(III), Co(II), Co(III), Cr(II), Cr(III), Mn(II), Mn(III), V(IV), and V(V).

Examples of the above X include Cl, Br, and I.

The metal halide salt represented by $M^1_e X_f$ is preferably one or more selected from zinc chloride, zinc bromide, and zinc iodide. In view of the interatomic distance between $M^2$ and X described later, it is more preferable to contain one or more selected from zinc chloride and zinc bromide.

Examples of the Ligand (organic ligand) include alcohols, ethers, esters, aldehydes, ketones, amides, nitriles and sulfides, ethylene glycol dimethyl ether, diethylene glycol dimethyl ether, and polyoxyalkylene polyols (or monools). The organic ligand may be composed of one type or two or more types. Examples of the alcohol include tert-butyl alcohol, n-butyl alcohol, sec-butyl alcohol, iso-butyl alcohol, tert-pentyl alcohol, iso-pentyl alcohol, and ethylene glycol mono-tert-butyl ether. Examples of the polyoxyalkylene polyol (or monool) include polypropylene diol. As the organic ligand, tert-butyl alcohol is preferred.

A preferred example of the DMC catalyst (A) is zinc hexacyanocobaltate ($Zn_3[Co(CN)_6]_2$) containing an organic ligand (Ligand), water, and zinc chloride or zinc bromide. Its chemical formula is thought to be

$$Zn_3[Co(CN)_6]_2 \cdot d(ZnCl_2) \cdot g(Ligand) \cdot h(H_2O)$$

or

$$Zn_3[Co(CN)_6]_2 \cdot d(ZnBr_2) \cdot g(Ligand) \cdot h(H_2O).$$

The DMC catalyst (A) has a moisture content of 8,000 to 140,000 ppm as measured by the Karl Fischer method, and diffraction peaks at $2\theta = 36°$ and $2\theta = 47°$, but no diffraction peak at $2\theta = 34°$ in an X-ray diffraction pattern.

The DMC catalyst (A) having such moisture content and crystal structure can achieve both favorable catalytic activity and the suppression of high molecular weight impurities. Furthermore, the water resistance is excellent, meaning that the catalytic activity is unlikely to decrease even when stored in an environment of high water content.

When the above moisture content is too high or too low, the catalytic activity is likely to decrease. When it is too high, it is thought that hydrolysis of the active sites by water other than water of crystallization (water not contained in the crystals) is likely to occur. When it is too low, it is thought that the crystal structure changes due to the reduction in water of crystallization and the structure contributing for achieving both favorable catalytic activity and the suppression of high molecular weight impurities is likely to be lost.

The above moisture content is preferably from 9,000 to 120,000 ppm, and more preferably from 10,000 to 100,000 ppm.

From the viewpoint of obtaining favorable catalytic activity, it is preferable that the DMC catalyst (A) has diffraction peaks at $2\theta = 14°$ and $2\theta = 16°$ in an X-ray diffraction pattern, and that P16/P14 representing a ratio of the peak intensity at $2\theta = 16°$ (P16) with respect to the peak intensity at $2\theta = 14°$ (P14) is less than 3.

P16/P14 is thought to vary depending on the number of water molecules encapsulated in the DMC catalyst crystals, and the value of P16/P14 tends to increase as the number of encapsulated water molecules decreases.

In the DMC catalyst (A), the interatomic distance between a transition metal atom ($M^2$) that serves as the active site and a halogen atom (X) derived from the metal salt, as obtained by EXAFS (Extended X-ray Absorption Fine Structure) analysis of a spectrum measured using the XAFS (X-ray Absorption Fine Structure) method, is preferably from 2.20 to 2.40 angstroms (Å).

Favorable catalytic activity is likely to be obtained when a halogen atom (X) having the above interatomic distance of 2.20 to 2.40 Å is used.

The interatomic distances in DMC catalysts determined by the EXAFS analysis are also described in the literature ("X-RAY SPECTROMETRY," 2015, Volume 44, Issue 5, pp. 330-338, titled "Structural properties and chemical bonds in double metal cyanide catalysts").

<Double metal cyanide complex slurry catalyst>

A slurry catalyst of the present embodiment contains the DMC catalyst (A) and a dispersion medium.
The content of the DMC catalyst (A) with respect to the total mass of the slurry catalyst is, for example, preferably from 0.001 to 60% by mass, more preferably from 0.003 to 50% by mass, and still more preferably from 0.006 to 30% by mass.
The slurry catalyst is preferably a slurry obtained by dispersing the DMC catalyst (A) in a dispersion medium, that is, a slurry containing the DMC catalyst (A) and a dispersion medium, and in addition to that, may contain impurities and moisture that are unavoidable during production.
It is preferred that the dispersion medium for the slurry catalyst substantially contains no water. More specifically, the moisture content of the dispersion medium is preferably 500 ppm or less, more preferably 200 ppm or less, and may be an undetectable amount.
Similar to the moisture content of the DMC catalyst (A), the moisture content of the dispersion medium is a water content (unit: ppm by mass) measured by the Karl Fischer measurement method.
As the dispersion medium for the slurry catalyst, an organic solvent known in the art for slurry catalysts can be used. For example, a refractory hydroxy compound described in Japanese Patent No. 3194255 can be used. The above hydroxy compound is a hydroxyl group-containing compound having 1 to 8 hydroxyl groups and a molecular weight of 100 to 8,000, and a compound having an alcoholic hydroxyl group such as a polyether polyol is preferred.
When the DMC catalyst (A) is used as a catalyst at the time of producing a polyether polyol by ring-opening polymerization of an epoxide, a polyether polyol is preferred as the dispersion medium for the slurry catalyst, in view that it does not become an impurity for the product (polyether polyol).
Further, the initiator (polyether polyol) used at the time of ring-opening polymerization of an epoxide may be used as a part of the dispersion medium.
The number average molecular weight of the polyether polyol used as the dispersion medium is preferably from 100 to 8,000, and more preferably from 600 to 3,000. When the number average molecular weight of the polyether polyol is equal to or more than the lower limit value of the above range, it will not become a catalyst poison, and when it is equal to or less than the upper limit value, the handling properties of the slurry catalyst are excellent.
The hydroxyl value of the polyether polyol used as an initiator is preferably, for example, from 3 to 842 mg KOH/g, and more preferably from 7 to 561 mg KOH/g.
In particular, when the dispersion medium is the above product (polyether polyol), the content of the DMC catalyst (A) with respect to the total mass of the slurry catalyst is preferably from 1 to 60% by mass, more preferably from 3 to 40% by mass, and still more preferably from 5 to 30% by mass.
In particular, when the dispersion medium contains the above initiator (polyether polyol), the content of the DMC catalyst (A) with respect to the total mass of the slurry catalyst is preferably from 0.003 to 0.02% by mass, more preferably from 0.004 to 0.015% by mass, and still more preferably from 0.006 to 0.01% by mass.

<Method for producing double metal cyanide complex catalyst>

In a method for producing a double metal cyanide complex catalyst according to the present embodiment, an organic ligand is coordinated to a reaction product obtained by reacting a metal halide salt with a transition metal cyanide compound to synthesize a double metal cyanide complex catalyst, and then the moisture content of the double metal cyanide complex catalyst is adjusted so as to obtain a double metal cyanide complex catalyst satisfying a specific moisture content and a specific X-ray diffraction pattern.
The method for synthesizing the double metal cyanide complex catalyst is not particularly limited, and a known method can be used.
Preferably, first, a liquid mixture containing the DMC catalyst (A) and water is obtained by coordinating an organic ligand, in the presence of water, to a reaction product obtained by reacting a metal halide salt with a transition metal cyanide compound in the presence of water. The DMC catalyst (A) is obtained by removing impurities and water from the obtained liquid mixture and reducing the moisture content of the obtained solid to a predetermined range.
As shown in Examples mentioned later, DMC catalysts with a moisture content of more than 140,000 ppm tend to exhibit a diffraction peak at $2\theta = 34°$, making it impossible to achieve both favorable catalytic activity and the suppression of high molecular weight impurities. Further, even if the moisture content of a DMC catalyst has been temporarily reduced to a range of 8,000 to 140,000 ppm, when it comes into contact with water that does not contain an organic ligand, a diffraction peak appears at $2\theta = 34°$, and its catalytic activity is significantly reduced or it no longer exhibits catalytic activity. Moreover, if the moisture content is reduced too much, the peak at $2\theta = 47°$ disappears and the catalytic activity is no longer exhibited.
Therefore, in a step of removing water in the above liquid mixture, by gradually reducing the moisture content of the DMC catalyst to a predetermined range while avoiding contact with water that does not contain an organic ligand, it is possible to produce a DMC catalyst (A) that has a predetermined crystal structure and is able to achieve both favorable catalytic activity and the suppression of high molecular weight impurities.

For the above method for obtaining a liquid mixture and the above method for removing impurities and water in the liquid mixture, methods can be selected and used from among known methods that do not allow the DMC catalyst to come into contact with water containing no organic ligand.

For a method for removing water in the above liquid mixture, for example, a drying method for obtaining a solid DMC catalyst can be used.

However, since a conventional drying method is unable to control the moisture content in the DMC catalyst within the range of 8,000 to 140,000 ppm, a moisture content adjustment step is provided in order to control the moisture content to a level that allows the DMC catalyst to maintain an optimal structure. In the moisture content adjustment step, it is preferable to strictly control the DMC catalyst so that it does not come into contact with moisture outside the DMC catalyst. The moisture content adjustment step may be performed in a continuous manner with an immediately prior step.

When producing a solid DMC catalyst, in the moisture content adjustment step, heating and drying are performed, for example, at a temperature of 160°C or lower, preferably 140°C or lower. The heating time is determined so that the moisture content in the solid after drying is within the range of 8,000 to 140,000 ppm. If necessary, the heating time is determined by monitoring the change in the moisture content in the solid over time during the heating and drying step. Drying conditions of 80 to 140°C and 5 to 24 hours are more preferred. When the drying temperature exceeds the upper limit value of the above range, the crystal structure of the DMC catalyst may not be maintained. In other words, when the drying temperature is equal to or lower than the upper limit value of the above range, the crystal structure of the DMC catalyst is likely to be maintained.

Heating and drying may be performed in an air atmosphere, or may be performed in a reduced-pressure atmosphere, but are preferably performed in an air atmosphere. In order to avoid contact with moisture as much as possible after heating and drying, it is preferable to provide a step of returning the temperature to normal temperature in a dry gas (such as dry nitrogen) after heating and drying. Further, when heating and drying are performed under a reduced-pressure atmosphere, a step of returning the pressure to normal pressure by introducing a dry gas (such as dry nitrogen) that does not react with the DMC catalyst is preferred in order to avoid contact with moisture as much as possible. In either case of performing heating and drying under an air atmosphere or a reduced-pressure atmosphere, it is preferable to prevent the DMC catalyst from contacting with moisture as much as possible during the process from stopping heating to lowering the temperature to normal temperature. In particular, it is preferable that the DMC catalyst whose temperature has dropped to near normal temperature due to the temperature lowering process is prevented from contacting with moisture as much as possible. The term "dry gas" refers to a gas with a water vapor content of 12 ppm by volume or less with respect to the total volume of the gas at 25°C.

In the case of returning to normal temperature and normal pressure using a dry gas, it is advantageous in that the heating and drying time can be shortened and the moisture content adjustment step can be carried out efficiently. On the other hand, by adjusting the temperature and time for heating and drying, it is also possible to control the moisture content in the solid after drying to 8,000 to 140,000 ppm. Since there is an upper limit value to the heating and drying temperature as mentioned above, the moisture content in the solid after drying is substantially controlled by the drying time. The longer the drying time, the easier it is to control the moisture content in the solid after drying to 140,000 ppm or less. Further, in this case, even if returned to normal temperature and normal pressure using air rather than a dry gas, the moisture content in the solid after drying may be from 8,000 to 140,000 ppm. However, since the drying time becomes longer, the efficiency of the moisture content adjustment step reduces.

Examples of preferred aspects of the method for producing a double metal cyanide complex catalyst of the present embodiment include the following method.

First, an aqueous solution of a metal halide salt is reacted with an aqueous solution of a transition metal cyanide compound to produce a reaction product. An aqueous solution of an organic ligand is added thereto and stirred to coordinate the organic ligand, thereby obtaining a liquid mixture containing a double metal cyanide complex catalyst and water. The obtained liquid mixture is subjected to solid-liquid separation to obtain a solid. The solid-liquid separation can be carried out by a method known in the art, and examples thereof include filtration and centrifugation. An operation of washing the obtained solid with an aqueous solution containing an organic ligand and performing solid-liquid separation is carried out once or more, preferably twice or more.

The obtained solid is dried so that the moisture content falls within the above specified range, and is pulverized as necessary.

<Method for producing double metal cyanide complex slurry catalyst>

A method for producing a slurry catalyst of the present embodiment includes a slurry preparation step in which a slurry containing a double metal cyanide complex catalyst and a dispersion medium is prepared, and a moisture adjustment step in which the moisture content of the slurry is adjusted so that the moisture content of the double metal cyanide complex catalyst in the slurry catalyst falls within a specific range, the moisture content of the dispersion medium falls within a specific range, and the double metal cyanide complex catalyst satisfies a specific X-ray diffraction pattern. The preferred range for the moisture content of the double metal cyanide complex catalyst in the slurry catalyst and the preferred range for the moisture content of the dispersion medium are the same as the ranges described above. Further, the preferred range for the X-ray diffraction pattern of the double metal cyanide complex catalyst are also the same as the range described above.

The slurry preparation step is not particularly limited, and a known method can be used.

Preferably, a liquid mixture containing a DMC catalyst and water is first obtained by coordinating an organic ligand, in the presence of water, to a reaction product obtained by reacting a metal halide salt with a transition metal cyanide compound in the presence of water. A method can be used in which impurities and water are removed from the obtained liquid mixture, and a dispersion medium is added thereto to prepare a slurry containing the DMC catalyst and the dispersion medium.

For the above method for obtaining a liquid mixture and the above method for removing impurities and water in the liquid mixture, methods can be selected and used from among known methods that do not allow the DMC catalyst to come into contact with water containing no organic ligand.

The above method for removing water in the liquid mixture is preferably a method that gradually reduces the moisture content of the slurry to a predetermined range while avoiding contact with water that does not contain an organic ligand. For example, it may be a solvent substitution method for obtaining a slurry catalyst by replacing the water in the above liquid mixture with a dispersion medium.

However, since a conventional solvent substitution method is unable to control the moisture content in the DMC catalyst within the range of 8,000 to 140,000 ppm, a moisture content adjustment step is provided in order to control the moisture content to a level that allows the DMC catalyst to maintain an optimal structure. In the moisture content adjustment step, it is preferable to strictly control the slurry so that it does not come into contact with moisture other than the slurry. The moisture content adjustment step may be performed in a continuous manner with an immediately prior step.

In the case of producing a slurry catalyst, the moisture content adjustment step preferably involves drying under reduced pressure under conditions of, for example, 0 to 160°C and 1 to 24 hours until the moisture content of the DMC catalyst in the slurry catalyst reaches 8,000 to 140,000 ppm, and then involves a step of returning the pressure to normal pressure by introducing a dry gas (such as dry nitrogen) that does not react with the DMC catalyst in order to avoid contact with moisture as much as possible. The conditions for drying under reduced pressure are more preferably from 25 to 140°C for 2 to 10 hours. When the drying temperature exceeds the upper limit value of the above range, the crystal structure of the DMC catalyst may not be maintained. In other words, when the drying temperature is equal to or lower than the upper limit value of the above range, the crystal structure of the DMC catalyst is likely to be maintained.

In the case of returning the pressure to normal pressure using a dry gas, it is advantageous in that the heating and drying time can be shortened and the moisture content adjustment step can be carried out efficiently. On the other hand, by adjusting the temperature and time for heating and drying, it is also possible to control the moisture content of the DMC catalyst in the slurry catalyst after drying to 8,000 to 140,000 ppm. Since there is an upper limit value to the heating and drying temperature as mentioned above, the moisture content of the DMC catalyst in the slurry catalyst after drying is substantially controlled by the drying time. The longer the drying time, the easier it is to control the moisture content of the DMC catalyst in the slurry catalyst after drying to 140,000 ppm or less. Further, in this case, even if returned to normal temperature and normal pressure using air rather than a dry gas, the moisture content of the DMC catalyst in the slurry catalyst after drying may be from 8,000 to 140,000 ppm. However, since the drying time becomes longer, the efficiency of the moisture content adjustment step reduces.

It is also preferable to use a pre-dehydrated dispersion medium so that the moisture content of the dispersion medium in the slurry catalyst after the moisture content adjustment step is 500 ppm or less.

Examples of preferred aspects of the method for producing a double metal cyanide complex catalyst of the present embodiment include the following aspect.

First, an aqueous solution of a metal halide salt is reacted with an aqueous solution of a transition metal cyanide compound to produce a reaction product. An aqueous solution of an organic ligand is added thereto and stirred to coordinate the organic ligand, thereby obtaining a liquid mixture containing a double metal cyanide complex catalyst and water. The obtained liquid mixture is subjected to solid-liquid separation to obtain a solid. An operation of washing the obtained solid with an aqueous solution containing an organic ligand and performing solid-liquid separation is carried out once or more, preferably twice or more. A dispersion medium is added to the obtained solid and mixed, after which the uncoordinated organic ligand and water are removed by volatilization.

In this manner, a slurry in which the DMC catalyst is dispersed in the dispersion medium is obtained. The obtained slurry is subjected to the moisture content adjustment step described above to produce a slurry catalyst containing the desired DMC catalyst.

<Method for producing polymer>

The DMC catalyst of the present embodiment is suitable as a catalyst when producing polymers such as polyether polyols and polyester polyols by polymerizing cyclic ethers such as epoxides.

A known method can be employed as the method for producing a polymer using a DMC catalyst.

Examples of epoxides include propylene oxide (hereinafter also referred to as "PO") and a combination of PO and ethylene oxide.

Polyols such as polyether polyols and polyester polyols are used, for example, as raw materials for various polyurethane coating materials, elastomers, sealants, foams, and adhesives.

According to the present embodiment, a DMC catalyst is obtained that can achieve both favorable catalytic activity and the suppression of high molecular weight impurities.

For example, a DMC catalyst can be obtained that has catalytic activity such that the catalyst activity life [kg-PO/g-cat] measured by a method described in a section entitled "catalyst activity life evaluation" in Examples is 140 kg/g or more, and has an ultra-high molecular weight component content of 1,000 ppm or less as determined by the "Method for measuring ultra-high molecular weight component content" in Examples.

The above content of the ultra-high molecular weight component is more preferably 950 ppm or less, and still more preferably 900 ppm or less. By reducing the content of the ultra-high molecular weight component, the physical properties (for example, stability, strength, and the like) of a polyol produced using the DMC catalyst and an article produced using this polyol can be improved.

Further, although a conventional DMC catalyst exhibits poor water resistance and is prone to a decrease in catalytic activity when stored in an atmosphere of high water content, according to the present embodiment, a DMC catalyst with excellent water resistance can be obtained.

For example, a DMC catalyst can be obtained in which the rate of decrease in catalyst activity life measured by a method described in a section entitled "water resistance evaluation" in Examples is less than 25%.

<Method for evaluating DMC catalyst>

When the moisture content and X-ray diffraction pattern of a DMC catalyst are measured, and if the moisture content is from 8,000 to 140,000, diffraction peaks are present at $2\theta = 36°$ and $2\theta = 47°$, but diffraction peaks are absent at $2\theta = 34°$, the DMC catalyst can be evaluated as having favorable catalytic activity and, when used as a polymerization catalyst of epoxides, producing little high molecular weight impurities.

Further, when the moisture content and X-ray diffraction pattern of a DMC catalyst are measured, and if the moisture content is from 8,000 to 140,000, diffraction peaks are present at $2\theta = 36°$ and $2\theta = 47°$, but diffraction peaks are absent at $2\theta = 34°$, the DMC catalyst can be evaluated as having favorable water resistance.

EXAMPLES

The present invention will be described in detail below by showing examples. However, the present invention is not limited by the following examples.

<Evaluation method>

[X-ray diffraction measurement]

X-ray diffraction (XRD) measurements were performed using an X-ray diffractometer (SmartLab (device name), manufactured by Rigaku Corporation).

CuKα radiation ($\lambda = 1.54180$ Å) was used as X-rays, with a tube voltage and a tube current set to 45 kV and 200 mA, respectively, and a light source monochromatized by a Johansson monochromator with a focusing optical system was used.

A high speed detector (D/teX (device name), manufactured by Rigaku Corporation) was used as a detector, with a measurement angle range of $2\theta = 10$ to $80°$, a step scan with a step width of $(\Delta 2\theta) = 0.010°$, and a scan speed of $20°$/min.

The obtained X-ray diffraction patterns were analyzed using analysis software, and the presence or absence of diffraction peaks at $2\theta = 34°$, $36°$, and $47°$ was recorded.

Further, a ratio (P16/P14) of the peak intensity at $2\theta = 16°$ (P16) with respect to the peak intensity at $2\theta = 14°$ (P14) was determined. A P16/P14 ratio of less than 3 was evaluated as "○", while a P16/P14 ratio of equal to or more than 3 was evaluated as "×".

[Moisture content measurement]

The moisture content of each sample was measured based on Section 6.4 Coulometric Titration Method in Karl Fischer Titration Method in Test methods for water content, as described in JIS K0068:2001 using a Karl Fischer moisture measuring device manufactured by Mitsubishi Analytic Co., Ltd.

The moisture content in the slurry was measured using a target slurry to be measured as a sample.

The moisture content in the solid (powder) was measured using a target powder to be measured as a sample.

The moisture content of a dispersion medium was measured using a sample obtained by increasing or decreasing the moisture of the dispersion medium alone was increased or decreased under the same conditions as those used in an operation of increasing or decreasing the moisture after adding the dispersion medium during the slurry catalyst production process. The moisture content (unit: ppm) in a DMC catalyst (solid) was obtained using the following formulas (i) and (ii).

$$\text{Moisture content in DMC catalyst} = (Sw - Pw \times B/100)/(A/100) \qquad (i)$$

$$B = 100 - A \qquad (ii)$$

Sw: moisture content in the slurry (unit: ppm)
Pw: moisture content of the dispersion medium (unit: ppm)
A: solid content of the slurry (unit: % by mass)
B: proportion of dispersion medium in the slurry (unit: % by mass)

[XAFS measurement]

An EXAFS spectrum obtained by Fourier transform of a spectrum measured by the XAFS method was corrected for phase shift, and the interatomic distance (coordination distance) between a transition metal atom ($M^2$) serving as an active site and a halogen atom (X) derived from a metal salt was calculated.

When the above interatomic distance was within a range of 2.20 to 2.40 Å, it was evaluated as "○", and when it was outside this range, it was evaluated as "×".

[Evaluation of catalyst activity life]

A 200 mL autoclave was charged with 25 g of polyoxypropylene triol with an Mn of 1,500 and a hydroxyl value of 168 mg KOH/g as an initiator, and a DMC catalyst (in a slurry form or a solid form) obtained in each example, and PO was sequentially added thereto at a temperature condition of 120°C.

The amount of DMC catalyst charged was set so that the metal concentration of the DMC catalyst with respect to 1,000 g of initiator would be the catalyst concentration (unit: ppm) listed in Table 3.

The catalyst was considered to have been deactivated at the time point where no pressure drop was observed after the addition of PO. Based on the amount of PO (substrate) added and the amount of DMC catalyst charged until deactivation, a value of catalyst activity life [kg-PO/g-cat] (a ratio of the mass (kg) of polymerized polypropylene oxide with respect to 1 g of catalyst) (unit: kg/g) was calculated in order to evaluate "how much the catalyst functions with respect to the substrate in terms of mass ratio". When no pressure drop was observed, not even once, after the addition of PO, it was evaluated as "no activity".

[Water resistance evaluation]

The DMC catalyst (in a slurry form or a solid form) obtained in each example was stored for one day in a high humidity atmosphere at a temperature of 40°C and a relative humidity of 80%. The catalyst activity life [kg-PO/g-cat] was measured using the method described above before and immediately after storage.

A rate of decrease (unit: %) in the catalyst activity life (A2) immediately after storage with respect to the catalyst activity life (A1) before storage was calculated using the following formula. Based on the obtained rate of decrease, water resistance was evaluated in accordance with the following criteria.

$$\text{Rate of decrease in catalyst activity life} = (A1 - A2) / A1 \times 100$$

(Evaluation criteria)

○: rate of decrease of less than 25%.

×: rate of decrease of 25% or more.

[Number average molecular weight (Mn) measurement]

The molecular weight of polyether polyol was analyzed using a GPC system (HLC-8320 (product name) manufactured by Tosoh Corporation) with an RI detector.
Two TSK-GEL Super HZ4000 (4.6 mm × 150 mm) columns and two Super HZ2500 (4.6 mm × 150 mm) columns were used by connecting in series in this order. The number average molecular weight Mn was obtained through calculation by a calibration curve produced using tetrahydrofuran (THF) as an eluent at a flow rate of 0.35 ml/min and setting a column temperature to 40°C, using a polystyrene standard sample (Easical PS-2 (product name) manufactured by Agilent Technologies, Inc., molecular weight range: 580 to 400,000).

[Method for measuring the content of ultra-high molecular weight components (CAD-HPLC method)]

Using the DMC catalyst obtained in each example, polyether polyols were synthesized according to a method of the following Production Example 1.
When the number average molecular weight of the polyether polyol to be measured is W, components with molecular weights ranging from 12 times (12W) to 46 times (46W) of W were defined as ultra-high molecular weight components.
The content of ultra-high molecular weight components with respect to the total mass of polyether polyol was determined using a measurement method described in Japanese Unexamined Patent Application, First Publication No. 2019-137810.
More specifically, the content of ultra-high molecular weight components was measured under the following conditions.
Equipment and detectors: high-performance liquid chromatography system (U3000 HPLC system (product name) manufactured by Thermo Fisher Scientific Inc.; degasser: SRD-3600; pump: DGP3600SD; autosampler: WPS-3000TSL; column compartment: TCC-3000SD, UV-Vis detector: VWD-3400RS; charged particle detector: Corona Veo)

Eluent: THF for HPLC
Eluent flow rate: 0.2 mL/min
Sample injection volume: 20 μL

Columns: one column on the upstream side described below and one column on the downstream side described below were connected in series in this order. The exclusion limit molecular weight of each column is an exclusion limit molecular weight when measuring the molecular weight of polystyrene using THF for HPLC as an eluent.
Upstream column: Shodex KF-404HQ (product name) manufactured by Showa Denko K.K. (a column for organic solvent liquid chromatography, with a packing material of styrene-divinylbenzene copolymer with an average particle size of 3 μm, an inner diameter of 4.6 mm, a length of 250 mm, a number of theoretical plates (TP) per column of 25,000 or more, and an exclusion limit molecular weight of 1,000,000).
Downstream column: Shodex KF-403HQ (product name) manufactured by Showa Denko K.K. (a column for organic solvent liquid chromatography, with a packing material of styrene-divinylbenzene copolymer with an average particle size of 3 μm, an inner diameter of 4.6 mm, a length of 250 mm, a number of theoretical plates (TP) per column of 25,000 or more, and an exclusion limit molecular weight of 1,000,000). and a molecular weight exclusion limit of 70,000).

(1) A polyether polyol as a specimen to be tested was dissolved in THF for HPLC so as to achieve a concentration of 0.6% by mass, then filtered through a syringe filter with a pore diameter of 0.45 μm to prepare a sample, and analyzed under the HPLC conditions described above, thereby obtaining a chromatogram with retention time on the X-axis and signal intensity on the Y-axis.
(2) A calibration curve showing a relationship between the molecular weight and the retention time was produced using a polystyrene standard sample (Easical PS-2 (product name) manufactured by Agilent Technologies, Inc., molecular weight range: 580 to 400,000).

(3) Using the calibration curve produced in (2), a retention time X1 corresponding to the above 12 W and a retention time X2 corresponding to the above 46 W were determined.

(4) An area of a portion surrounded by the above chromatogram, a baseline, a straight line X = X1, and a straight line X = X2 was obtained by electronic integration.

(5) A polystyrene standard sample with a molecular weight of 92,600 (PSS-05 No. 500-16 (product name) manufactured by Gas Chromatography Industrial Co., Ltd.) was dissolved in THF for HPLC so as to achieve concentrations of 1, 6, 20, and 60 ppm by mass, and the resulting standard solutions were used as samples and analyzed under the above HPLC conditions to obtain chromatograms. An area of a portion surrounded by the obtained chromatogram and the baseline was taken as the areal area. The areal area at each concentration was calculated, and a calibration curve with an intercept of zero was produced, showing a relationship between the concentration of polystyrene with a molecular weight of 92,600 and the areal area.

(6) Using the calibration curve produced in (5), the area calculated in (4) was converted to the concentration of polystyrene with a molecular weight of 92,600, and used as the concentration of the ultra-high molecular weight component in the sample prepared in (1).

(7) The mass of the ultra-high molecular weight component in the sample prepared in (1) was calculated from the concentration value of the ultra-high molecular weight component obtained in (6), and the content of the ultra-high molecular weight component with respect to the mass of the specimen to be tested (polyether polyol) used for preparing the sample was further calculated.

[Production Example 1: production of polyether polyol]

PO was subjected to ring-opening addition polymerization with glycerin using a KOH catalyst, and further purified using Kyowaad 600S (product name of a synthetic adsorbent manufactured by Kyowa Chemical Industry Co., Ltd.) to produce polyoxypropylene triol (initiator 1) with an Mn of 1,500 and a hydroxyl value of 112 mgKOH/g.

1,000 g of the initiator 1 and the DMC catalyst obtained in each example were added into a reaction vessel to prepare a reaction solution.

The amount of DMC catalyst charged was set so that the metal concentration of the DMC catalyst with respect to 1,000 g of initiator would be the catalyst concentration (unit: ppm) listed in Table 3.

Subsequently, after replacing the atmosphere inside the reaction vessel with nitrogen, the above reaction solution was heated while being stirred, and when the temperature reached 135°C, heating was stopped, and 120 g of PO was supplied into the reaction vessel and reacted with continued stirring.

It was confirmed that when PO was supplied into the reaction vessel, the internal pressure of the reaction vessel temporarily increased, and then gradually decreased, reaching the same level as the internal pressure of the reaction vessel immediately before PO was supplied. During this period, when the internal pressure began to decrease, the temperature of the reaction solution subsequently increased temporarily, and then gradually decreased. After the temperature increase of the reaction solution stopped, it was cooled to 135°C.

Subsequently, while maintaining the reaction solution at 135°C with stirring, 4,728 g of PO was supplied into the reaction vessel. The internal pressure stopped changing, thereby confirming the completion of the reaction. In this manner, a polyether polyol was obtained.

<Cases 1 to 11, 16>

Slurry catalysts were produced. Cases 2 to 4 and 8 are Examples of the present invention, and Cases 1, 5 to 7, 9 to 11, and 16 are Comparative Examples.

[Case 1]

An alkylene oxide ring-opening polymer was produced in advance.

That is, in the presence of a KOH catalyst, PO was subjected to ring-opening addition polymerization with propylene glycol, followed by dealkalization and purification to prepare a polyoxypropylene diol (hereinafter referred to as "polyol P1") having an average of 2 hydroxyl groups per molecule and an Mn of 2,000.

In the present Case, a zinc hexacyanocobaltate complex coordinated with tert-butyl alcohol (hereinafter also referred to as "TBA") (hereinafter also referred to as a "TBA-DMC catalyst") was produced using the following method.

First, an aqueous zinc chloride solution composed of 10.2 g of zinc chloride and 10 g of water was placed in a 500 mL flask. While stirring the aqueous zinc chloride solution at 300 revolutions per minute, an aqueous potassium hexacyanocobaltate solution composed of 4.2 g of potassium hexacyanocobaltate and 75 g of water was added dropwise to the aqueous zinc chloride solution over 30 minutes. During this time, the liquid in the flask was maintained at 40°C. After completing the dropwise addition of the aqueous potassium hexacyanocobaltate solution, the liquid in the flask was further stirred for 30 minutes, after which a mixture composed of 80 g of TBA, 80 g of water, and 0.6 g of polyol P1 was added thereto, and the resulting mixture was stirred at 40°C for 30 minutes and was further stirred at 60°C for 60 minutes to obtain a liquid mixture containing the TBA-DMC catalyst and water. This liquid mixture contained a salt (that is, KCl) produced by the reaction.

The obtained liquid mixture was filtered under pressure (0.25 MPa) using a circular filter plate with a diameter of 125 mm and quantitative filter paper for fine particles (No. 5C (product name) manufactured by Advantec Toyo Kaisha, Ltd.) to separate a solid containing a TBA-DMC catalyst (hereinafter referred to as a "filter cake").

Subsequently, the filter cake was washed with a liquid mixture of TBA and water to remove a salt (that is, KCl). More specifically, the filter cake was transferred to a flask, and a liquid mixture composed of 36 g of TBA and 84 g of water was added thereto, and the resulting mixture was stirred for 30 minutes, and was then filtered under pressure under the same conditions as described above. The obtained filter cake was transferred to a flask, and a liquid mixture composed of 108 g of TBA and 12 g of water was further added and stirred for 30 minutes to obtain a dispersion liquid (1) in which the TBA-DMC catalyst was dispersed in the liquid mixture of TBA and water.

A slurry catalyst (catalyst 1) was produced by replacing the dispersion medium of the obtained dispersion liquid (1) with the polyol P1.

More specifically, the dispersion liquid (1) was filtered under pressure under the same conditions as described above. The polyol P1 was added to the obtained filter cake so that the solid content was 5% by mass, volatile components were then removed by distillation under reduced pressure in conditions of 80°C and 3 hours, and an atmosphere (air) was introduced to return the pressure to normal pressure to obtain a slurry catalyst (catalyst 1) in which the TBA-DMC catalyst was dispersed in the polyol P1. It should be noted that a portion of the Polyol P1 contained in the slurry is believed to be coordinated to the TBA-DMC catalyst.

The moisture content in the slurry catalyst (catalyst 1) was measured using the method described above. Further, the same amount of polyol P1 as that of the polyol P1 added as the dispersion medium was prepared, volatile components were removed therefrom by distillation under reduced pressure in conditions of 80°C and 3 hours, and the moisture content of the resulting sample was measured and taken as the moisture content of the dispersion medium. The moisture content in the DMC catalyst was determined using the method described above. The results are shown in Table 1 (the same applies hereinafter unless otherwise specified).

Uncoordinated polyol P1 was removed from the obtained slurry catalyst using hexane, and the obtained solid sample was subjected to XRD and XAFS measurements using the methods described above. The measurement results are shown in Table 1 (the same applies hereinafter unless otherwise specified).

The catalyst activity life and water resistance of the obtained slurry catalyst were evaluated using the methods described above. Further, using the obtained slurry catalyst, a polyether polyol was produced using the method in Preparation Example 1 described above, and the content of ultra-high molecular weight components was measured.

These results are shown in Table 3 (the same applies hereinafter unless otherwise specified).

[Case 2]

In the present Case, a moisture content adjustment step was provided, thereby adjusting the moisture content to a lower level than in Case 1.

That is, a slurry catalyst (catalyst 1) was prepared in the same manner as in Case 1, and was further dried under reduced pressure in conditions of 115°C and 6 hours, as a moisture content adjustment step, to remove volatile components by distillation, and then dry nitrogen was introduced to return the pressure to normal pressure, thereby obtaining a slurry catalyst (catalyst 2).

The obtained slurry catalyst was subjected to measurements in the same manner as in Case 1.

[Case 3]

In the present Case, a moisture content adjustment step was provided, thereby adjusting the moisture content to a lower level than in Case 1.

More specifically, the drying time in the moisture content adjustment step in Case 2 was changed from 6 hours to 4 hours. Apart from that, a slurry catalyst (catalyst 3) was obtained in the same manner as in Case 2.

The obtained slurry catalyst was subjected to measurements in the same manner as in Case 1.

[Case 4]

In the present Case, a dispersion medium was further added to a slurry catalyst (catalyst 2) produced in the same manner as in Case 2 to produce the desired slurry catalyst.

That is, polyoxypropylenetriol served as the initiator 1 in Production Example 1 was added to a slurry catalyst (catalyst 2) produced in the same manner as in Case 2 so that the solid content was 0.0292% by mass, and then the resulting catalyst was further dried under reduced pressure in conditions of 130°C and 3 hours, as a moisture content adjustment step, to remove volatile components by distillation, and then dry nitrogen was introduced to return the pressure to normal pressure, thereby obtaining a slurry catalyst (catalyst 4).

The obtained slurry catalyst was subjected to measurements in the same manner as in Case 1.

[Case 5]

In the present Case, the moisture content was adjusted to an even lower level than in Case 2.

That is, a dispersion liquid (1) in which the TBA-DMC catalyst was dispersed in a liquid mixture of TBA and water was prepared and filtered in the same manner as in Case 1. Although the polyol P1 was added to the obtained filter cake in Case 1, in the present Case, the filter cake was freeze-dried before adding the polyol P1. The obtained freeze-dried product was dispersed in the polyol P1 so as to achieve a solid content of 5% by mass to obtain a slurry catalyst (catalyst 5).

The obtained slurry catalyst was subjected to measurements in the same manner as in Case 1.

It should be noted that since no catalytic activity was exhibited in the catalyst activity life measurement, the water resistance and the content of ultra-high molecular weight components were not evaluated.

[Case 6]

In the present Case, a slurry catalyst (catalyst 6) was produced by increasing the moisture content of the slurry catalyst (catalyst 2) in Case 2.

That is, the slurry catalyst (catalyst 2) obtained in Case 2 was left to stand in a high humidity atmosphere at an ambient temperature of 40°C and a relative humidity of 80% for 7 days to obtain a slurry catalyst (catalyst 6).

The obtained slurry catalyst was subjected to measurements in the same manner as in Case 1.

[Case 7]

In the present Case, after bringing the slurry catalyst (catalyst 2) in Case 2 into contact with water, the moisture content was reduced to the same level as in Case 2.

That is, the slurry catalyst (catalyst 2) obtained in Case 2 was added into 500 g of distilled water and stirred for 1 hour, and then the moisture was removed by distillation under reduced pressure at 80°C to obtain a slurry catalyst (catalyst 7).

The obtained slurry catalyst was subjected to measurements in the same manner as in Case 1.

Since no catalytic activity was exhibited in the catalyst activity life measurement, the water resistance and the content of ultra-high molecular weight components were not evaluated.

[Case 8]

A slurry catalyst (catalyst 8) was obtained in the same manner as in Case 2, with the exception that 10.2 g of zinc chloride was changed to 16.9 g of zinc bromide.

The obtained slurry catalyst was subjected to measurements in the same manner as in Case 1.

[Case 9]

A slurry catalyst (catalyst 9) was obtained in the same manner as in Case 6, with the exception that 10.2 g of zinc chloride was changed to 23.9 g of zinc iodide.

The obtained slurry catalyst was subjected to measurements in the same manner as in Case 1.

[Case 10]

10.2 g of zinc chloride in Case 2 was changed to 7.7 g of zinc fluoride. Due to the low solubility of zinc fluoride in water, although solid-phase synthesis of a DMC catalyst was attempted, the obtained product did not exhibit catalytic activity in epoxide polymerization.

[Case 11]

A slurry catalyst (catalyst 11) was obtained in the same manner as in Case 2, with the exception that 10.2 g of zinc chloride was changed to 14.2 g of zinc nitrate.

The obtained slurry catalyst was subjected to measurements in the same manner as in Case 1.

[Case 16]

A dispersion liquid (1) in which the TBA-DMC catalyst was dispersed in a liquid mixture of TBA and water was prepared in the same manner as in Case 1. The dispersion liquid (1) was filtered under pressure (0.25 MPa) using a circular filter plate with a diameter of 125 mm and quantitative filter paper for fine particles (No. 5C (product name) manufactured by Advantec Toyo Kaisha, Ltd.). The polyol P1 was added to the obtained filter cake so that the solid content was 5% by mass, followed by drying under reduced pressure at 80°C for 3 hours and then at 115°C for 4 hours, thereby removing volatile components by distillation under reduced pressure, and an atmosphere (air) was introduced to return the pressure to normal pressure to obtain a slurry catalyst (catalyst 16) in which the TBA-DMC catalyst was dispersed in the polyol P1.
The obtained slurry catalyst was subjected to measurements in the same manner as in Case 1.

<Cases 12 to 15, 17 to 19>

A DMC catalyst in a powder form was produced. Cases 13, 14, and 19 are Examples of the present invention, and Cases 12, 15, 17, and 18 are Comparative Examples.

[Case 12]

The dispersion liquid (1) prepared in the same manner as in Case 1 was filtered under pressure (0.25 MPa) using a circular filter plate with a diameter of 125 mm and quantitative filter paper for fine particles (No. 5C (product name) manufactured by Advantec Toyo Kaisha, Ltd.) to separate a filter cake. The obtained filter cake was dried under reduced pressure at 60°C for 2 hours without adding the polyol P1, and after drying under reduced pressure, an atmosphere (air) was introduced to return the pressure to normal pressure to obtain a DMC catalyst in a powder form (catalyst 12).
The obtained catalyst in a powder form was subjected to measurements in the same manner as in Case 1. The results are shown in Tables 2 and 3 (the same applies hereinafter unless otherwise specified).

[Case 13]

A filter cake was obtained in the same manner as in Case 12. The obtained filter cake was dried in air under conditions of 100°C and 7 hours without adding the polyol P1, and after drying in air, the temperature was returned to normal temperature under dry nitrogen to obtain a DMC catalyst in a powder form (catalyst 13). The moisture content in the DMC catalyst in a powder form (catalyst 13) was within a range of 8,000 to 140,000 ppm.
The obtained catalyst in a powder form was subjected to measurements in the same manner as in Case 1.

[Case 14]

A filter cake was obtained in the same manner as in Case 12. The obtained filter cake was dried in air under conditions of 100°C and 5 hours without adding the polyol P1, and after drying in air, the temperature was returned to normal temperature under dry nitrogen to obtain a DMC catalyst in a powder form (catalyst 14). The moisture content in the DMC catalyst in a powder form (catalyst 14) was within a range of 8,000 to 140,000 ppm.
The obtained catalyst in a powder form was subjected to measurements in the same manner as in Case 1.

[Case 15]

A filter cake was obtained in the same manner as in Case 12. The obtained filter cake was subjected to freeze-drying treatment without adding the polyol P1 to obtain a DMC catalyst in a powder form (catalyst 15).
The obtained catalyst in a powder form was subjected to measurements in the same manner as in Case 1.

[Case 17]

First, an aqueous solution containing 81.25 g of zinc chloride was prepared in a 5 L flask, and stirred at 450 revolutions per minute in order to improve dispersibility, miscibility, and shear force, while being maintained at 45°C. An aqueous solution containing 26 g of potassium hexacyanocobaltate (200 g of water) was added dropwise to the above aqueous zinc chloride solution over 30 minutes. After completion of the dropwise addition, a mixture of 325 g of TBA and 325 g of water was metered and supplied, and the resulting mixture was stirred at 45°C for 80 minutes. Subsequently, a mixture of 6.5 g of sodium cholate, 6.5 g of TBA, and 650 g of water was metered and supplied, and the resulting mixture was stirred for 20 minutes to obtain a dispersion. 350 g of this dispersion was filtered through a pressure suction filter under a pressure of 2.0 bar. Subsequently, the wet filter cake in the pressure suction filter was washed by filter cake washing under a pressure of 3.0 bar using a mixture of 2 g of sodium cholate, 70 g of TBA, and 30 g of water. The washed wet filter cake was dried under high vacuum at 100°C for 5 hours, and an atmosphere (air) was introduced to return the pressure to normal pressure to obtain a DMC catalyst in a powder form (catalyst 17).

The obtained catalyst in a powder form was subjected to measurements in the same manner as in Case 1.

[Case 18]

First, an aqueous zinc chloride solution composed of 10.2 g of zinc chloride and 10 g of water was prepared in a 500 mL flask, and stirred at 450 revolutions per minute in order to improve dispersibility, miscibility, and shear force, while being maintained at 40°C. An aqueous solution composed of 4.2 g of potassium hexacyanocobaltate and 75 g of water was added dropwise to the above aqueous zinc chloride solution over 30 minutes. After completion of the dropwise addition, the resulting mixture was further stirred for 30 minutes, after which a mixture composed of 80 g of TBA, 80 g of water, and 0.6 g of polyol P1 was added thereto, and the resulting mixture was stirred at 40°C for 30 minutes and was further stirred at 60°C for 60 minutes to obtain a liquid mixture containing a TBA-DMC catalyst and water. The obtained liquid mixture was filtered under pressure (0.25 MPa) using a circular filter plate with a diameter of 125 mm and quantitative filter paper for fine particles (No. 5C manufactured by Advantec Toyo Kaisha, Ltd.) to separate a solid containing the TBA-DMC catalyst (hereinafter referred to as a "filter cake"). Subsequently, the obtained filter cake was transferred to a flask, a liquid mixture composed of 36 g of TBA and 84 g of water was added thereto, and the resulting mixture was stirred for 30 minutes, and then pressure filtered for 15 minutes under the same conditions as described above. The obtained filter cake was transferred to a flask, and a liquid mixture composed of 108 g of TBA and 12 g of water was further added and stirred for 30 minutes to obtain a dispersion liquid (18) in which the TBA-DMC catalyst was dispersed in the liquid mixture of TBA and water. The dispersion liquid (18) was filtered under pressure (0.25 MPa) using a circular filter plate with a diameter of 125 mm and quantitative filter paper for fine particles (No. 5C (product name) manufactured by Advantec Toyo Kaisha, Ltd.) to separate a filter cake. The washed wet filter cake was dried under high vacuum at 100°C for 5 hours, and an atmosphere (air) was introduced to return the pressure to normal pressure, thereby obtaining a DMC catalyst in a powder form (catalyst 18).

The obtained catalyst in a powder form was subjected to measurements in the same manner as in Case 1.

[Case 19]

A liquid mixture containing a TBA-DMC catalyst and water was prepared in the same manner as in Case 1. The obtained liquid mixture was subjected to solid-liquid separation using a centrifuge to separate a solid containing the TBA-DMC catalyst (hereinafter referred to as a "filter cake"). Subsequently, the filter cake was transferred to a flask, a liquid mixture composed of 36 g of TBA and 84 g of water was added and stirred for 30 minutes, after which the obtained liquid mixture was subjected to solid-liquid separation using a centrifuge, and the obtained filter cake was transferred to a flask, and a liquid mixture composed of 108 g of TBA and 12 g of water was further added and stirred for 30 minutes to obtain a dispersion liquid (19) in which the TBA-DMC catalyst was dispersed in the liquid mixture of TBA and water. The obtained dispersion liquid (19) was subjected to solid-liquid separation using a centrifuge to separate the filter cake. The obtained filter cake was dried under high vacuum at 100°C for 8 hours without adding the polyol P1, and after removing volatile components by distillation, dry nitrogen was introduced to return the pressure to normal pressure, thereby obtaining a DMC catalyst in a powder form (catalyst 19).

The obtained catalyst in a powder form was subjected to measurements in the same manner as in Case 1.

[Table 1]

| | Counter anion | State of DMC catalyst | Moisture content in slurry (ppm) | Moisture content of dispersion medium (ppm) | Solid content (% by mass) | Moisture content in DMC catalyst (ppm) | Presence or absence of peaks in X-ray diffraction pattern | | | P16/P14 <3 | XAFS measured interatomic distance (angstrom) | |
|---|---|---|---|---|---|---|---|---|---|---|---|---|
| | | | | | | | 2θ = 34° | 2θ = 36° | 2θ = 47° | | | |
| 1 | C1 | Slurry | 8,000 | 200 | 5 | 156,200 | Present | Present | Present | ○ | 2.25 | ○ |
| 2 | C1 | Slurry | 2,500 | 80 | 5 | 48,480 | Absent | Present | Present | ○ | 2.25 | ○ |
| 3 | C1 | Slurry | 5,000 | 95 | 5 | 98,195 | Absent | Present | Present | ○ | 2.25 | ○ |
| 4 | C1 | Slurry | 120 | 90 | 0.0292 | 102,829 | Absent | Present | Present | ○ | 2.25 | ○ |
| 5 | C1 | Slurry | 500 | 130 | 5 | 7,530 | Absent | Present | Absent | × | 2.25 | ○ |
| 6 | C1 | Slurry | 20,000 | 150 | 5 | 397,150 | Present | Present | Present | × | 2.25 | ○ |
| 7 | C1 | Slurry | 2,300 | 100 | 5 | 44,100 | Present | Absent | Absent | × | Unmeasured | |
| 8 | Br | Slurry | 2,000 | 110 | 5 | 37,910 | Absent | Present | Present | ○ | 2.33 | ○ |
| 9 | I | Slurry | 38,000 | 120 | 5 | 757,720 | Absent | Present | Present | ○ | 2.44 | × |
| 10 | F | Slurry | - | 80 | 5 | - | Absent | Absent | Absent | × | Unmeasured | |
| 11 | NO$_3$ | Slurry | 2,800 | 90 | 5 | 54,290 | Absent | Present | Absent | × | Unmeasured | |
| 16 | C1 | Slurry | 7,900 | 90 | 5 | 156,290 | Present | Present | Present | ○ | Unmeasured | |

[Table 2]

|  | Counter anion | State of DMC catalyst | Moisture content in powder (ppm) | Presence or absence of peaks in X-ray diffraction pattern | | | P16/P14 <3 | XAFS measured interatomic distance (angstrom) | |
|---|---|---|---|---|---|---|---|---|---|
|  |  |  |  | 20 = 34° | 20 = 36° | 2θ = 47° |  |  |  |
| 12 | Cl | Powder | 170.000 | Present | Present | Present | ○ | 2.25 | O |
| 13 | Cl | Powder | 60,000 | Absent | Present | Present | ○ | 2.25 | ○ |
| 14 | Cl | Powder | 98,000 | Absent | Present | Present | ○ | 2.25 | ○ |
| 15 | Cl | Powder | 2.000 | Absent | Present | Absent | × | 2.25 | ○ |
| 17 | Cl | Powder | 160,000 | Present | Present | Present | ○ | Unmeasured | |
| 18 | Cl | Powder | 165,000 | Present | Present | Present | ○ | Unmeasured | |
| 19 | Cl | Powder | 78.000 | Absent | Present | Present | ○ | Unmeasured | |

[Table 3]

|  | Catalyst concentration (ppm) | Catalyst activity life [kg-PO/g-cat] (kg/g) | Content of ultra-high molecular weight components (ppm) | Water resistance |
|---|---|---|---|---|
| 1 | 292 | 140 or more | 1,900 | × |
|  | 146 |  | 1,700 |  |
| 2 | 292 | 140 or more | 950 | ○ |
|  | 146 |  | 900 |  |
| 3 | 292 | 140 or more | 1,000 | ○ |
|  | 146 |  | 950 |  |
| 4 | 292 | 140 or more | 870 | ○ |
| 5 | 292 | No activity | - | - |
| 6 | 292 | 80 | 1,200 | × |
| 7 | 292 | No activity | - | - |
| 8 | 292 | 140 or more | 600 | ○ |
|  | 146 |  | 520 |  |
| 9 | 292 | 65 | 1,100 | × |
| 10 | 292 | No activity | - | - |
| 11 | 292 | 10 | - | × |
| 12 | 292 | 140 or more | 2,000 | × |
|  | 146 |  | 1,750 |  |
| 13 | 292 | 140 or more | 900 | ○ |
|  | 146 |  | 850 |  |
| 14 | 292 | 140 or more | 980 | ○ |
|  | 146 |  | 950 |  |
| 15 | 292 | No activity | - | - |
| 16 | 292 | 140 or more | 1,900 | × |
|  | 146 |  | 1,750 |  |
| 17 | 292 | 140 or more | 1,900 | × |
|  | 146 |  | 1,800 |  |

(continued)

|  | Catalyst concentration (ppm) | Catalyst activity life [kg-PO/g-cat] (kg/g) | Content of ultra-high molecular weight components (ppm) | Water resistance |
|---|---|---|---|---|
| 18 | 292 | 140 or more | 1,950 | × |
|  | 146 |  | 1,800 |  |
| 19 | 292 | 140 or more | 900 | ○ |
|  | 146 |  | 800 |  |

As shown in the results in Tables 1 to 3, the DMC catalysts of Cases 1 and 12 exhibited high catalytic activity in epoxide polymerization, but produced large amounts of ultra-high molecular weight components. The DMC catalysts of Cases 5, 7, 10, and 15 exhibited no activity. The catalysts of Cases 6, 9, and 11 exhibited low activity. The DMC catalysts of Cases 16 to 18 exhibited high catalytic activity in epoxide polymerization, but produced large amounts of ultra-high molecular weight components.

On the other hand, the DMC catalysts of Cases 2 to 4, 8, 13, 14, and 19 which were adjusted by being provided with a moisture content adjustment step so as to have a moisture content of the DMC catalyst of 8,000 to 140,000 ppm, diffraction peaks at 20 = 36° and 47°, and no diffraction peak at 2θ = 34°, exhibited high catalytic activity and were able to reduce the content of ultra-high molecular weight components. Further, the water resistance was excellent, meaning that the catalytic activity was unlikely to decrease even when stored in an environment of high water content.

**Claims**

1. A double metal cyanide complex catalyst for epoxide polymerization reactions, wherein metal species contained in said double metal cyanide complex catalyst are zinc and cobalt,
the double metal cyanide complex catalyst having a moisture content of 8,000 to 140,000 ppm in accordance with a Karl Fischer method, and having diffraction peaks at 20 = 36° and 20 = 47°, but no diffraction peak at 2θ = 34° in an X-ray diffraction pattern.

2. A method for producing a double metal cyanide complex catalyst for epoxide polymerization reactions,

the method comprising coordinating an organic ligand to a reaction product obtained by reacting a metal halide salt with a transition metal cyanide compound,
wherein a metal of said metal halide salt is zinc, and a transition metal of said transition metal cyanide compound is cobalt, and,
after coordinating said organic ligand, a moisture content of said double metal cyanide complex catalyst is adjusted so that a moisture content of said double metal cyanide complex catalyst in accordance with a Karl Fischer method is from 8,000 to 140,000 ppm, and diffraction peaks are present at 20 = 36° and 2θ = 47°, but a diffraction peak is absent at 20 = 34° in an X-ray diffraction pattern of said double metal cyanide complex catalyst.

3. The method for producing a double metal cyanide complex catalyst according to Claim 2,
wherein said metal halide salt comprises one or more selected from zinc chloride and zinc bromide.

4. The method for producing a double metal cyanide complex catalyst according to Claim 2 or 3, wherein said organic ligand comprises tert-butyl alcohol.

5. A double metal cyanide complex slurry catalyst comprising:

the double metal cyanide complex catalyst according to Claim 1; and
a dispersion medium having a moisture content of 500 ppm or less in accordance with a Karl Fischer method.

6. The double metal cyanide complex slurry catalyst according to Claim 5,
wherein a content of said double metal cyanide complex catalyst is from 0.001 to 60% by mass with respect to a total mass of said double metal cyanide complex slurry catalyst.

7. A method for producing a double metal cyanide complex slurry catalyst containing a double metal cyanide complex catalyst for epoxide polymerization reactions,

in which metal species contained in said double metal cyanide complex catalyst are zinc and cobalt,
the method comprising:

a slurry preparation step of preparing a slurry containing said double metal cyanide complex catalyst and a dispersion medium; and
a moisture adjustment step of adjusting a moisture content of said slurry so that a moisture content of said double metal cyanide complex catalyst in accordance with a Karl Fischer method is from 8,000 to 140,000 ppm, a moisture content of said dispersion medium in accordance with the Karl Fischer method is 500 ppm or less, and diffraction peaks are present at $2\theta = 36°$ and $2\theta = 47°$, but a diffraction peak is absent at $2\theta = 34°$ in an X-ray diffraction pattern of said double metal cyanide complex catalyst.

8. The method for producing a double metal cyanide complex slurry catalyst according to Claim 7,

wherein said slurry preparation step further comprises a step in which an organic ligand is coordinated in the presence of water to a reaction product obtained by reacting a metal halide salt containing zinc as a metal with a transition metal cyanide compound containing cobalt as a transition metal in the presence of water to obtain a liquid mixture containing a double metal cyanide complex catalyst and water, and
impurities and water are removed from said liquid mixture and a dispersion medium is added thereto to prepare a slurry containing the double metal cyanide complex catalyst and the dispersion medium.

9. A method for producing a polymer, comprising polymerizing an epoxide in the presence of the double metal cyanide complex catalyst according to Claim 1.

## INTERNATIONAL SEARCH REPORT

| | International application No. |
|---|---|
| | **PCT/JP2024/020110** |

**A. CLASSIFICATION OF SUBJECT MATTER**

*C08G 65/10*(2006.01)i; *B01J 31/28*(2006.01)i; *B01J 37/04*(2006.01)i
FI:   C08G65/10; B01J37/04 102; B01J31/28 M

According to International Patent Classification (IPC) or to both national classification and IPC

**B. FIELDS SEARCHED**

Minimum documentation searched (classification system followed by classification symbols)

C08G65/10; B01J31/28; B01J37/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2015-214605 A (ASAHI GLASS COMPANY, LIMITED) 03 December 2015 (2015-12-03) claims, examples | 1-9 |
| A | JP 2003-531251 A (BAYER AKTIENGESELLSCHAFT) 21 October 2003 (2003-10-21) claims, examples | 1-9 |
| A | US 3829505 A (GENERAL TIRE & RUBBER COMPANY) 13 August 1974 (1974-08-13) claims, examples | 1-9 |
| A | US 2013/0131386 A1 (DOW GLOBAL TECHNOLOGIES LLC) 23 May 2013 (2013-05-23) claims, examples | 1-9 |
| A | JP 2006-077248 A (BAYER MATERIAL SCIENCE LLC) 23 March 2006 (2006-03-23) claims, examples | 1-9 |
| A | JP 2002-282699 A (BAYER ANTWERPEN NV) 02 October 2002 (2002-10-02) claims, examples | 1-9 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 August 2024** | **13 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/020110**

### C. DOCUMENTS CONSIDERED TO BE RELEVANT

| Category* | Citation of document, with indication, where appropriate, of the relevant passages | Relevant to claim No. |
|---|---|---|
| A | JP 08-311171 A (ARCO CHEMICAL TECHNOLOGY, L.P.) 26 November 1996 (1996-11-26)<br>claims, examples | 1-9 |
| A | JP 08-104741 A (ARCO CHEMICAL TECHNOLOGY, L.P.) 23 April 1996 (1996-04-23)<br>claims, examples | 1-9 |
| A | US 2023/0038470 A1 (PUSAN NATIONAL UNIVERSITY INDUSTRY-UNIVERSITY COOPERATION FOUNDATION) 09 February 2023 (2023-02-09)<br>claims, examples | 1-9 |
| A | JP 2003-190808 A (ASAHI GLASS COMPANY, LIMITED) 08 July 2003 (2003-07-08)<br>claims, examples | 1-9 |

Form PCT/ISA/210 (second sheet) (July 2022)

EP 4 722 272 A1

## INTERNATIONAL SEARCH REPORT
### Information on patent family members

International application No.

**PCT/JP2024/020110**

| Patent document cited in search report | | | Publication date (day/month/year) | Patent family member(s) | | | Publication date (day/month/year) |
|---|---|---|---|---|---|---|---|
| JP | 2015-214605 | A | 03 December 2015 | (Family: none) | | | |
| JP | 2003-531251 | A | 21 October 2003 | US | 2003/0158449 | A1 | |
| | | | | claims, examples | | | |
| | | | | WO | 2001/080994 | A1 | |
| | | | | EP | 1276563 | A1 | |
| | | | | CN | 1424937 | A | |
| | | | | KR | 10-0769003 | B1 | |
| US | 3829505 | A | 13 August 1974 | (Family: none) | | | |
| US | 2013/0131386 | A1 | 23 May 2013 | WO | 2012/000189 | A1 | |
| | | | | EP | 2588532 | A1 | |
| | | | | CN | 103080229 | A | |
| JP | 2006-077248 | A | 23 March 2006 | US | 2006/0058182 | A1 | |
| | | | | claims, examples | | | |
| | | | | EP | 1634644 | A1 | |
| | | | | KR | 10-2006-0051191 | A | |
| | | | | CN | 1762592 | A | |
| JP | 2002-282699 | A | 02 October 2002 | US | 5627122 | A | |
| | | | | claims, examples | | | |
| | | | | EP | 755716 | A1 | |
| | | | | CN | 1147423 | A | |
| | | | | KR | 10-1997-0005391 | A | |
| JP | 08-311171 | A | 26 November 1996 | US | 5712216 | A | |
| | | | | claims, examples | | | |
| | | | | EP | 743093 | A1 | |
| | | | | CN | 1140181 | A | |
| | | | | KR | 10-1996-0040446 | A | |
| JP | 08-104741 | A | 23 April 1996 | US | 5482908 | A | |
| | | | | claims, examples | | | |
| | | | | EP | 700949 | A2 | |
| | | | | CN | 1133300 | A | |
| | | | | KR | 10-1996-0010719 | A | |
| US | 2023/0038470 | A1 | 09 February 2023 | WO | 2021/137632 | A1 | |
| | | | | EP | 4086000 | A1 | |
| | | | | KR | 10-2021-0087677 | A | |
| JP | 2003-190808 | A | 08 July 2003 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023090792 A
- JP HEI7196778 A
- WO 1997040086 A
- JP 2003103177 A
- JP 3194255 B
- JP 2019137810 A

**Non-patent literature cited in the description**

- Structural properties and chemical bonds in double metal cyanide catalysts. *X-RAY SPECTROMETRY*, 2015, vol. 44 (5), 330-338